# EUROPÄISCHE PATENTSCHRIFT

(11) **EP 3 414 082 B1**
(45) Veröffentlichungstag und Bekanntmachung des Hinweises auf die Patenterteilung: **14.07.2021**
(21) Anmeldenummer: 17701125.1
(22) Anmeldetag: 23.01.2017
(51) Int. Cl.: B29C 70/86, B29C 70/52

(54) **VERFAHREN ZUR HERSTELLUNG EINES STRUKTURELEMENTS AUS FASERVERBUND-HOHLPROFIL UND LASTEINLEITUNGSELEMENT, SOWIE STRUKTURELEMENT**
METHOD FOR PRODUCING A STRUCTURAL ELEMENT CONSISTING OF A FIBRE-COMPOSITE HOLLOW PROFILE AND LOAD-INTRODUCING ELEMENT, AND STRUCTURAL ELEMENT
PROCÉDÉ DE FABRICATION D'UN ÉLÉMENT STRUCTURAL À PARTIR D'UN PROFILÉ CREUX EN COMPOSITE DE FIBRES ET D'UN ÉLÉMENT DE TRANSFERT DE CHARGE AINSI QU'ÉLÉMENT STRUCTURAL

(30) Priorität: 10.02.2016 DE 102016202012
(43) Veröffentlichungstag der Anmeldung: 19.12.2018
(73) Patentinhaber: Leichtbau-Zentrum Sachsen GmbH, 01307 Dresden (DE)
(72) Erfinder: LENZ, Florian, 01099 Dresden (DE); WITSCHEL, Bernhard, 01277 Dresden (DE); LEPPER, Martin, 01279 Dresden (DE)
(74) Vertreter: Kailuweit & Uhlemann Patentanwälte Partnerschaft mbB
(86) Internationale Anmeldenummer: PCT/EP2017/051326
(87) Internationale Veröffentlichungsnummer: WO 2017/137242

(56) Entgegenhaltungen:
- US-A1- 2015 013 819

## Beschreibung

Die Erfindung betrifft ein Verfahren zur Herstellung von Strukturelementen, die ein Hohlprofil aus endlosfaserverstärktem Kunststoff mit duroplastischer Matrix und mindestens ein Lasteinleitungselement umfassen, sowie ein derartiges Strukturelement.

Insbesondere bei eindeutigen Lastpfaden, wie beispielsweise bei Zug-/Druck-Streben, Torsionswellen und Druckleitungen gegeben, weisen Faserverbundprofile zahlreiche Vorteile gegenüber metallischen Profilen auf, etwa bezüglich ihrer Steifigkeitseigenschaften und ihrer geringeren Masse. Für den Einsatz der Faserverbund-Strukturen bestehen dabei vor allem zwei Herausforderungen, nämlich zum einen die Gestaltung der Lasteinleitung in das Profil bzw. die Integration des Profils in eine Baugruppe, und zum anderen die effiziente und kostengünstige Fertigung der Profile.

Für die Fertigung von Faserverbund-Profilen mit duroplastischer Matrix stehen im Wesentlichen zwei Verfahrenstypen, das Pultrusionsverfahren (Strangziehen) und die Einzelstückfertigung, z. B. im RTM-Verfahren, zur Verfügung.

Dabei ermöglicht das Pultrusionsverfahren (Strangziehen) eine endlose, kostengünstige Fertigung von Faserverbund-Profilen; benötigte Lasteinleitungselemente müssen allerdings nachträglich zum Beispiel klebtechnisch oder durch spanende Bearbeitung des Profils eingebracht werden. Klebeverbindungen, also stoffschlüssige Verbindungen eines Lasteinleitungselements mit dem Faserverbund-Profil, weisen eine mangelnde Alterungsbeständigkeit auf; außerdem gestalten sich die Kontrolle und Qualitätssicherung der Klebeverbindung äußerst schwierig. Die in den Druckschriften DE 10 2006 039565 A1, DE 10 2004 021144 A1 oder DE 102 49591 A1 offenbarten Elemente, bei denen die Lasteinleitungselemente mit Faserverbundstäben verklebt sind, eignen sich nur bis zu einer begrenzten Lasthöhe. Eine spanende Bearbeitung des Faserverbund-Profils geht nachteilig mit einer Faserschädigung und Minderung der mechanischen Eigenschaften einher.

Bei der Einzelstückfertigung, wie beispielsweise in der Druckschrift WO 2005/105417 A1 beschrieben, kann das Lasteinleitungselement im Fertigungsprozess integral an das Profil angeformt werden, was zu vorteilhaften mechanischen Eigenschaften führt. Das Verfahren ist allerdings aufwändig und teuer.

Eine Endlosfertigung von Faserverbund-Profilen, die mit einem Lasteinleitungselement verbunden sein sollen, was auch als Funktionalisierung des Profils bezeichnet wird, ist nur bei nachträglicher Integration des Lasteinleitungselements in das Faserverbund-Profil möglich. Das bedeutet, dass zur Schaffung einer formschlüssigen Verbindung zwischen Faserverbund-Profil und Lasteinleitungselement das Profil umformbar sein muss. Dies setzt die Möglichkeit einer Erweichung des Matrixsystems bei der Funktionalisierung voraus.

US 2015/013819 A1 offenbart eine rohrförmige Verbundstrebe, die innen versteift ist sowie ein Verfahren zu deren Herstellung mittels eines Aufblaskerns.

Thermoplastische Matrixsysteme bieten diese Möglichkeit. Ein Verfahren zur Herstellung von Strukturelementen mit thermoplastischer Matrix ist in der DE 10 2014 004158 A1 beschrieben. Allerdings weisen Halbzeuge mit thermoplastischer Matrix, neben den typischerweise bestehenden Nachteilen, wie geringerer Steifigkeit, höherer Temperaturabhängigkeit, schlechterer Chemikalienbeständigkeit und größerer Wasserdurchlässigkeit, im Vergleich mit Halbzeugen mit duroplastischer Matrix häufig Qualitätsmängel auf. Sie erfordern im Vergleich zu duroplastischen Matrixsystemen mit jeweils ähnlicher Glasübergangstemperatur für gewöhnlich höhere Konsolidierungsdrücke und -temperaturen, was Werkzeugsysteme aufwändig und vergleichsweise teuer macht.

Aufgabe der Erfindung ist es daher, die aufgeführten Nachteile des Standes der Technik zu überwinden, indem ein Verfahren zur Herstellung von Strukturelementen aus endlosfaserverstärktem Kunststoff-Hohlprofil mit duroplastischer Matrix und integriertem Lasteinleitungselement sowie ein mittels des Verfahrens hergestelltes Strukturelement beschrieben wird, das geeignet ist, die Herstellungskosten durch Eignung zur Großserienfertigung zu reduzieren.

Zur Lösung der Aufgabe wird ein Verfahren zur Herstellung eines Strukturelements, umfassend ein Hohlprofil aus endlosfaserverstärktem Kunststoff mit einem duroplastischen Matrixmaterial, aufweisend eine Erweichungstemperatur unterhalb der Vernetzungstemperatur, und mindestens ein Lasteinleitungselement, vorgeschlagen, wobei das Verfahren zumindest die folgenden Verfahrensschritte umfasst:
a. Bereitstellung eines Zuschnitts eines Hohlprofils aus mittels Endlosfasern verstärktem Kunststoff auf einem Liner, wobei der Liner die innere Mantelfläche des Hohlprofils bildet, und wobei das Hohlprofil durch Erwärmen auf eine Temperatur gleich oder oberhalb der Erweichungstemperatur des Matrixmaterials und unterhalb der Vernetzungstemperatur des Matrixmaterials imprägniert ist;
b. Entfernen des Liners im für die Lasteinleitung vorgesehenen Innenbereich des Hohlprofils;
c. Anordnen eines Lasteinleitungselements am für die Lasteinleitung vorgesehenen Innenbereich des Hohlprofils;
d. Konsolidierung und Funktionalisierung des Strukturelements aus Hohlprofil und Lasteinleitungselement durch Erwärmung des Strukturelements auf eine Temperatur gleich oder oberhalb der Vernetzungstemperatur des Matrixmaterials und Aufbringen eines radial nach innen wirkenden Drucks auf das Strukturelement, wobei das Hohlprofil formschlüssig an das Lasteinleitungselement angeformt wird.

Das vorgeschlagene Verfahren ermöglicht es in besonders vorteilhafter Weise, Lasteinleitungselemente formschlüssig in ein duroplastisches Hohlprofil einzubringen, ohne dass die mechanischen Eigenschaften des Hohlprofils beeinträchtigt werden.

In einer bevorzugten Ausführungsform des erfindungsgemäßen Verfahrens umfasst de Bereitstellung des Hohlprofils gemäß Verfahrensschritt a. zumindest folgende Verfahrensschritte:
i. Fertigung eines Hohlprofils aus mittels Endlosfasern verstärktem Kunststoff auf einem Liner, wobei der Liner die innere Mantelfläche des Hohlprofils bildet;
ii. Erwärmen des Hohlprofils auf eine Temperatur gleich oder oberhalb der Erweichungstemperatur des Matrixmaterials und unterhalb der Vernetzungstemperatur des Matrixmaterials;
iii. Kühlung des Hohlprofils auf eine Temperatur unterhalb der Erweichungstemperatur des Matrixmaterials;
iv. Zuschnitt des Hohlprofils und Entnahme aus der Fertigungsstrecke.

Zur Fertigung des Faserverbund-Hohlprofils sind verschiedene Faser-Verarbeitungsverfahren anwendbar, mittels derer ein Verstärkungsfaserlaminat auf einen Liner aufgebracht wird.

Als Verstärkungsfasern kommen alle bekannten Fasern in Betracht, insbesondere Kohlenstoff-,-Glas-, Aramid-, Natur-, Basalt- und Mischfasem. Zudem können unterschiedliche Verstärkungsfaserarchitekturen Verwendung finden, von unverkreuzten Fasersträngen bis hin zu textilen Bindungen, wie etwa Geflechten.

In einer bevorzugten Ausführungsform des erfindungsgemäßen Verfahrens erfolgt die Fertigung des Hohlprofils durch Ablegen von mit dem duroplastischen Matrixmaterial vorimprägnierten Endlosfasern oder Endlosfaserhalbzeugen auf dem Liner.

In einer weiteren bevorzugten Ausführungsform des erfindungsgemäßen Verfahrens erfolgt die Fertigung des Hohlprofils in endloser Weise durch ein dem Strangziehen ähnlichen Verfahren, wobei das duroplastische Matrixmaterial den auf dem Liner abgelegten Endlosfasern zugeführt wird.

Das Ablegen der Endlosfasern auf dem Liner erfolgt in einer weiteren bevorzugten Ausführungsform des Verfahrens kontinuierlich durch Abzug von einem Spulenständer, wobei die Faserrichtung parallel zur Achse des Hohlprofils bzw. der Maschinenrichtung ist und eine axiale Verstärkung des Hohlprofils erzeugt wird, und/oder mittels eines Flechtrads und/oder einer Spiralisiermaschine, wobei Fasern in nicht-axialer Richtung verlaufen und eine off-axis Verstärkung des Hohlprofils erzielt wird.

In einer weiteren bevorzugten Ausführungsform des erfindungsgemäßen Verfahrens wird das duroplastische Matrixmaterial den Endlosfasern mittels Pulverharzauftrag oder mittels Harzinjektion zugeführt. Der Pulverharzauftrag wird besonders bevorzugt nach jedem oben aufgeführten Verarbeitungsschritt durchgeführt, also nach dem axialen Ablegen durch Abzug von einem Spulenständer, nach dem Ablegen über ein Flechtrad und nach dem Ablegen mittels einer Spiralisiermaschine.

Das sich Verfahrensschritt i. anschließende Imprägnieren durch Erwärmen des Hohlprofils auf eine Temperatur gleich oder oberhalb der Erweichungstemperatur des Matrixmaterials und unterhalb der Vernetzungstemperatur des Matrixmaterials (Verfahrensschritt ii.) dient der Benetzung der Endlosfasern mit dem Matrixmaterial oder einer Vorverpressung von bereits mit dem duroplastischen Matrixmaterial vorimprägnierten Endlosfaserhalbzeugen.

Vor dem Zuschnitt des Hohlprofils und seiner Entnahme aus der Fertigungsstrecke (Verfahrensschritt iv.) ist das Hohlprofil auf eine Temperatur unterhalb der Erweichungstemperatur des Matrixmaterials abzukühlen (Verfahrensschritt iii.). Die Kühlung kann aktiv oder passiv erfolgen.

In einer weiteren bevorzugten Ausführungsform des erfindungsgemäßen Verfahrens wird als Matrixmaterial ein duroplastisches 1-Komponenten-(1K-)System verwendet, welches aus einem Epoxidharz und einem sekundären Amin als Härter besteht. Besonders bevorzugt ist das sekundäre Amin ausgewählt aus einer derVerbindungen Imidazol, einem Imidazol-Derivat oder einem Komplex der allgemeinen Formel MeL₄X₂, wobei Me ein zweiwertiges Metallkation, ausgewählt aus Kupfer, Cobalt, Nickel und Zink, L ein Ligand, ausgewählt aus Imidazol und einem Imidazol-Derivat, und X ein Anion, ausgewählt aus Fluorid, Chlorid, Bromid, lodid und Nitrat, ist. 1K-Systeme bezeichnen Zusammensetzungen, die alle für eine Härtungsreaktion relevanten Bestandteile in nur einer Komponente enthalten. Dadurch entfällt das aufwändige Mischen der Bestandteile. Die Erweichungstemperatur des Epoxidharzes liegt unter der Vernetzungstemperatur der Matrix. Die Vernetzungstemperatur ist die Temperatur, bei der die Härtungsreaktion zwischen Epoxidharz und latentem Härter ausgelöst wird. Vorteilhaft ist das beschriebene Matrixmaterial ein bei Raumtemperatur festes 1K-System, das in Pulverform sehr gut zu verarbeiten ist.

In einer weiteren bevorzugten Ausführungsform des Verfahrens wird als Material für den die innere Mantelfläche des Hohlprofils bildenden, hülsenförmigen Liner, auf dem das Verstärkungsfaserlaminat aufgebracht wird, Metall oder Kunststoff verwendet. Bei der Verwendung von Kunststoff ist in besonders bevorzugter Weise die Erweichungstemperatur des Kunststoffs größer als die Aushärtetemperatur der duroplastischen Matrix des Hohlprofils. Bei der Verwendung eines Metallliners ist ebenfalls in besonders bevorzugter Weise die Schmelztemperatur des Metalls größer als die Aushärtetemperatur der duroplastischen Matrix des Hohlprofils. Der Liner kann somit nicht nur als stützendes Element, sondern auch als inneres Formwerkzeug bei weiteren Verfahrensschritten dienen. Vorteilhaft entfällt durch die Fertigung des Hohlprofils auf einem Liner als innerer Mantelfläche das Entformen des Profils von einem Kern.

Im für die Lasteinleitung in das Strukturelement aus Hohlprofil und Lasteinleitungselement vorgesehenen Bereich muss der Liner von der inneren Mantelfläche des Hohlprofils entfernt werden (Verfahrensschritt b.). Dies ist notwendig, da im Lasteinleitungsbereich das Verstärkungsfaserlaminat formschlüssig an das in diesem Bereich im Inneren des Hohlprofils angeordnete Lasteinleitungselement anzuformen ist. Das Entfernen des Liners erfolgt in einer weiteren bevorzugten Ausführungsform des erfindungsgemäßen Verfahrens durchAusdrehen oder Ausstechen.

In einer weiteren bevorzugten Ausführungsform des erfindungsgemäßen Verfahrens ist das Lasteinleitungselement so im für die Lasteinleitung vorgesehenen Innenbereich des Hohlprofils angeordnet, dass das Lasteinleitungselement und der Liner des Hohlprofils im nicht für die Lasteinleitung vorgesehenen Innenbereich des Hohlprofils eine lückenlose, druckbeaufschlagbare Oberfläche bilden. Vorteilhaft ist dadurch kein zusätzliches inneres Formwerkzeug notwendig.

In einer weiteren bevorzugten Ausführungsform des erfindungsgemäßen Verfahrens wird das Hohlprofil mit einer thermisch kontraktierbaren Umhüllung ummantelt, die sich durch Wärmeeinwirkung zusammenzieht. Die Ummantelung kann nach Verfahrensschritt a. oder b. oder c. des erfindungsgemäßen Verfahrens durchgeführt werden.

In einer weiteren bevorzugten Ausführungsform des erfindungsgemäßen Verfahrens wird die Ummantelung des Hohlprofils mit einer thermisch kontraktierbaren Umhüllung nach einem der Verfahrensschritte i. oder ii. oder iii. oder iv. des erfindungsgemäßen Verfahrens durchgeführt.

In einer weiteren bevorzugten Ausführungsform des erfindungsgemäßen Verfahrens erfolgt die Ummantelung des Hohlprofils mit einer thermisch kontraktierbaren Umhüllung nach Verfahrensschritt i. Bei Durchführung des Verfahrensschritts ii. erfolgt anschließend durch Erwärmung des Hohlprofils auf eine Temperatur gleich oder oberhalb der Erweichungstemperatur des Matrixmaterials und unterhalb der Vernetzungstemperatur des Matrixmaterials eine erste thermische Kontraktion der Umhüllung bis zum passgenauen Anlegen an die äußere Mantelfläche des Hohlprofils. Dabei zieht sich die Umhüllung nur über einen geringen Anteil des maximalen Schrumpfbereichs zusammen; der deutlich überwiegende Anteil des maximalen Schrumpfbereichs steht zur Aktivierung in anschließenden Verfahrensschritten zur Verfügung. Vorteilhaft dient die Umhüllung als außenkonturstabilisierendes Element für das Hohlprofil während der Durchführung des Verfahrensschritts ii.

Bei der thermisch kontraktierbaren Umhüllung des Hohlprofils handelt es sich in einer Ausgestaltung des erfindungsgemäßen Verfahrens um Schrumpfband, Schrumpffolie und/oder einen Schrumpfschlauch.

In einer weiteren Ausgestaltung des erfindungsgemäßen Verfahrens wird die thermisch kontraktierbare Umhüllung mittels einer Spiralisiermaschine auf die äußere Mantelfläche des Hohlprofils aufgebracht.

Die Kontraktion der Umhüllung durch Erwärmung wird in einer weiteren bevorzugten Ausführungsform des erfindungsgemäßen Verfahrens dazu genutzt, im nicht für die Lasteinleitung vorgesehenen Bereich des Strukturelements, also dem Bereich, in dem kein Lasteinleitungselement angeordnet ist, einen radial nach innen gerichteten Druck auf das Verstärkungsfaserlaminat des Hohlprofils zu dessen Konsolidierung auszuüben. Dazu wird das Strukturelement mindestens auf die Vernetzungstemperatur des Matrixmaterials erwärmt, besonders bevorzugt auf den Temperaturbereich oberhalb der Vernetzungstemperatur, bei der die Umhüllung einen großen Schrumpfbereich aufweist. Gleichzeitig mit der Erwärmung wird der zur Konsolidierung notwendige Druck durch die mittels der Erwärmung ausgelöste Schrumpfung der Umhüllung aufgebracht. Vorteilhaft ist bei dieser Ausführungsform, dass kein zusätzliches äußeres Formwerkzeug zur Konsolidierung notwendig ist.

Als inneres Formwerkzeug für die Konsolidierung kann in besonders bevorzugter Weise der Liner des Hohlprofils dienen, wenn die Erweichungs- bzw. Schmelztemperatur des Linermaterials größer als die Vernetzungstemperatur des Matrixmaterials ist, der Liner während der Konsolidierung also seine Stabilität bewahrt. Ist die Erweichungs- bzw. Schmelztemperatur des Linermaterials kleiner als die Vernetzungstemperatur des Matrixmaterials, kann der nicht zur Lasteinleitung vorgesehene Bereich des Strukturelements mit einem den Innenabmessungen des Hohlprofils angepassten Kern gestützt werden.

Die Aufbringung des Konsolidierungsdrucks kann zusätzlich zur oder ohne Nutzung einer thermisch kontraktierbaren Umhüllung durch eine Druckbeaufschlagung des Liners im Innenbereich des Hohlprofils, beispielsweise über einen Blasdorn, bei Stützung des Außenbereichs mittels eines äußeren Formwerkzeugs erfolgen.

Im für die Lasteinleitung vorgesehenen Bereich des Strukturelements, also dem Bereich, in dem das Lasteinleitungselement im Hohlprofil angeordnet ist, ist zur Funktionalisierung des Strukturelements die Erwärmung des Strukturelements mindestens auf die Vernetzungstemperatur des Matrixmaterials sowie das Aufbringen eines radial nach innen gerichteten Drucks notwendig, um das Verstärkungsfaserlaminat des Hohlprofils im Lasteinleitungsbereich zu konsolidieren und an das Lasteinleitungselement anzuformen. Als inneres Formwerkzeug dient dabei das Lasteinleitungselement.

Der radial nach innen wirkende Druck auf das Strukturelement im für die Lasteinleitung vorgesehenen Bereich kann in bevorzugten Ausführungsformen des erfindungsgemäßen Verfahrens mittels einer Druckmembran oder mittels eines geteilten Formwerkzeugs oder mittels eines geteilten Formwerkzeugs und einer umzuformenden Hülse aufgebrachtwerden.

Die Verfahrensvariante unter Nutzung einer Druckmembran basiert auf dem Verfahren des Außenhochdruckumformens, benötigt aber geringere Drücke (< 20 bar). De Druckübertragung von einem äußeren Umformwerkzeug erfolgt mittels eines Übertragungsmediums auf eine Druckmembran. Vorteile dieser Ausführungsform sind, dass kein anzupassendes Formwerkzeug benötigt wird; ferner kann eine hohe Umformkraft aufgebracht werden, und ein Toleranzenausgleich ist in einem weiten Bereich möglich. Außerdem kann die Anformung an diverse Hinterschnittgeometrien des Lasteinleitungselements in beliebigen Richtungen durchgeführt werden.

Bei der Verfahrensvariante des Pressens mittels eines geteilten äußeren Formwerkzeugs hat die Kontur des Formwerkzeugs der Kontur des Lasteinleitungselements einschließlich seiner Hinterschnitte zu entsprechen. Die Verwendung eines geteilten Formwerkzeugs bietet vorteilhaft die Möglichkeit, eine hohe Umformkraft aufzuwenden sowie eine exakt definierte Außenkontur zu erhalten. Aufgrund der Teilung des Formwerkzeugs besteht allerdings die Gefahr, Teile des Hohlprofils in den Teilungsebenen des Werkzeugs einzuklemmen.

Durch die Verfahrensvariante des Pressens mittels eines geteilten äußeren Formwerkzeugs unter Nutzung einer umformbaren Hülse wird das Einklemmen von Teilen des Hohlprofils in den Teilungsebenen des Formwerkzeugs vermieden.

In einer weiteren bevorzugten Ausführungsform des erfindungsgemäßen Verfahrens wird der radial nach innen wirkende Druck auf das Strukturelement zu dessen Konsolidierung und Funktionalisierung im für die Lasteinleitung vorgesehenen Bereich durch thermische Kontraktion der Umhüllung aufgebracht. Vorteilhaft ist diese Verfahrensvariante technisch besonders einfach umzusetzen, und es entstehen keine zusätzlichen Werkzeugkosten. Die Variante kann allerdings nur bei einfachen Hinterschnittgeometrien in Umfangsrichtung angewendet werden.

Bei einem mit dem vorbeschriebenen Verfahren hergestellten Strukturelement, welches ein Hohlprofil aus endlosfaserverstärktem Kunststoff mit einem duroplastischen Matrixmaterial, aufweisend eine Erweichungstemperatur unterhalb der Vernetzungstemperatur, sowie mindestens ein Lasteinleitungselement umfasst, sind Hohlprofil und Lasteinleitungselement formschlüssig miteinander verbunden. Dabei ist das Hohlprofil an die Kontur des Lasteinleitungselements angeformt. Ein Liner (2) bildet die innere Mantelfläche des Hohlprofils (1) und ist im für die Lasteinleitung vorgesehenen Innenbereich des Hohlprofils (1) entfernt.

In einer bevorzugten Ausführungsform weist das Hohlprofil des erfindungsgemäßen Strukturelements einen kreisringförmigen Querschnitt auf.

In einer weiteren bevorzugten Ausführungsform weist das Lasteinleitungselement des erfindungsgemäßen Strukturelements Hinterschnitte auf.

Das vorgeschlagene Verfahren ermöglicht es besonders vorteilhaft, hochbelastete duroplastische Bauteile mit vergleichsweise einfacher Maschinen- und Prozesstechnik ohne aufwändige Dosier- und Injektionstechnik herzustellen. Prozessfenster sind in weiten Grenzen einstellbar. Zur Konsolidierung und Funktionalisierung des Strukturelements aus Hohlprofil und Lasteinleitungselement ist kein die gesamte Länge des Strukturelements abdeckendes Formwerkzeug notwendig.

Vorteile des mit dem erfindungsgemäßen Verfahren hergestellten erfindungsgemäßen Strukturelements sind die störungsfreie Lasteinleitung ohne qualitätstechnisch schwer kontrollierbare klebtechnische Verbindungen oder die Notwendigkeit einer spanenden Bearbeitung des Hohlprofils. Bei der Wahl möglicher Hinterschnittgeometrien besteht eine große Gestaltungsfreiheit, so dass das erfindungsgemäße Strukturelement einen breiten Anwendungsbereich aufweist.

Im Folgenden wird die Erfindung mittels Ausführungsbeispielen anhand mehrerer Darstellungen erläutert, ohne auf diese beschränkt zu sein.

Dabei zeigt **Fig.** 1 einen Längsschnitt eines mittels erfindungsgemäßer Verfahrensschritte hergestellten Hohlprofils. In **Fig.** 2 ist ein Ausschnitt einer Prozesskette zur Endlosfertigung eines Hohlprofils dargestellt. **Fig.** 3 zeigt ein erfindungsgemäßes Strukturelement. Die **Fig.** 4a bis 4d geben Ausführungsbeispiele zur Aufbringung eines Konsolidierungs- und Funktionalisierungsdrucks im Lasteinleitungsbereich eines Strukturelements wieder.

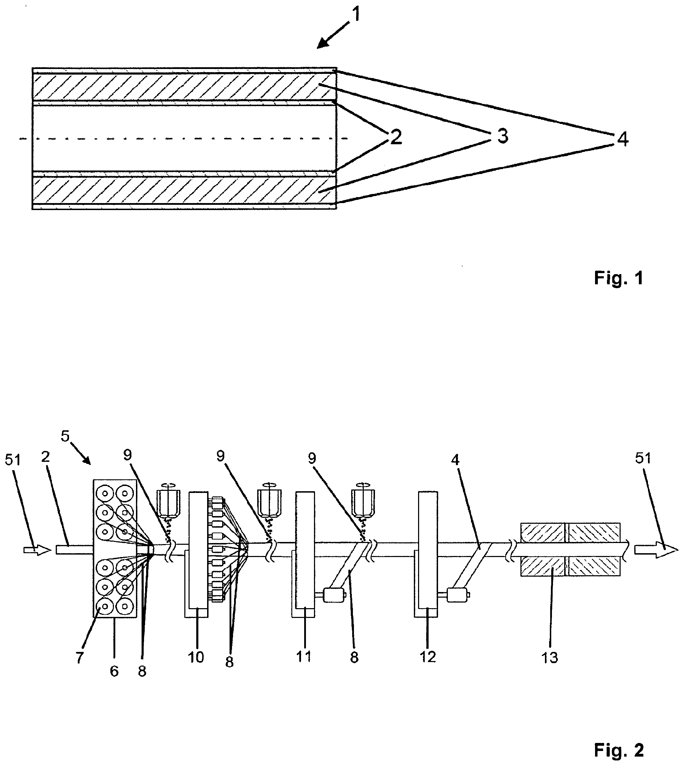

In **Fig.** 1 ist ein Längsschnitt durch ein Hohlprofil 1 dargestellt, welches als Halbzeug in weiteren Verfahrensschritten zur Herstellung eines Strukturelements verarbeitet wird. Das Hohlprofil 1 weist bevorzugt Hohlzylinderform auf. Die stützende, innere Mantelfläche wird durch einen dünnen Metall- oder Kunststoff-Liner 2 gebildet. Auf dem Liner 2 befindet sich eine Schicht endlosfaserverstärkten Kunststoffs 3. Die Verstärkungsfasern verlaufen sowohl in Längsrichtung zur axialen Verstärkung des Profils 1 als auch in beliebigen nicht-axialen Richtungen zur off-axis Verstärkung des Profils 1. Das Verstärkungsfaserlaminat 3 weist eine duroplastische B-stage-Matrix aus einem Epoxidharz und einem sekundären Amin als Härter, bevorzugt Imidazol oder ein Imidazol-Derivat, auf. B-stage bedeutet dabei, dass die Erweichungstemperatur des Epoxidharzes unterhalb der Vernetzungstemperatur von Epoxidharz und Härter liegt. Die äußere Mantelfläche des Hohlprofils 1 bildet ein Schrumpfband 4, das mittels einer ersten Erwärmung passgenau auf die Verstärkungsfaserlaminatschicht 3 aufgeschrumpft wird. Die Verarbeitung des Hohlprofils 1 zum erfindungsgemäßen Strukturelement 14 erfolgt in anschließenden Verfahrensschritten.
**Fig.** 2 zeigt einen Ausschnitt einer Fertigungsstrecke 5 zur kontinuierlichen Endlosfertigung eines Hohlprofils 1. Dargestellt ist die Prozesskette von der Zuführung des Liners 2 über verschiedene Bearbeitungsschritte des Hohlprofil-Rohlings und dessen Umwicklung mit einem Schrumpfband 4 bis zur Imprägnierung des Hohlprofil-Rohlings mittels eines beheizten Werkzeugs 13. Nicht dargestellt sind der sich der gezeigten Prozesskette anschließende Abzug des Profils 1 sowie der Zuschnitt und die Entnahme von der Fertigungsstrecke 5.
   Von den Spulen 7 eines Spulenständers 6 werden Endlosfasern oder Rovings 8 in Maschinenrichtung 51 abgezogen und in axialer Richtung auf dem Liner 2 abgelegt. Daran anschließend wird Matrixmaterial 9, das bei Raumtemperatur in festem Zustand vorliegt, in Pulverform auf den Rohling, hier also den mit axialen Verstärkungsfasern belegten Liner 2, aufgetragen. Im nächsten Schritt durchläuft der Rohling ein Flechtrad 10, durch das verflochtene Rovings 8, in beliebigen Richtungen verlaufend, auf den axialen Verstärkungsfasern abgelegt werden. Dadurch wird eine off-axis Verstärkung des Hohlprofils 1 erzielt. Es folgt die Berieselung des Rohlings mit pulverförmigem Matrixmaterial 9. Eine weitere off-axis Verstärkung erfolgt mittels einer Spiralisiermaschine 11, von der Rovings 8 in einem bestimmten Winkel zur Profilachse auf dem Rohling abgelegt werden. Es folgt wiederum die Berieselung des Rohlings mit pulverförmigem Matrixmaterial9.
   In einem folgenden Verfahrensschritt wird der Rohling mittels einer SchrumpfbandSpiralisiermaschine 12 lückenlos mit einem Schrumpfband 4 ummantelt.
   In einem nächsten Verfahrensschritt erfolgt die Imprägnierung, also die Faserinfiltration mit dem Matrixmaterial, indem der Rohling durch ein beheiztes Werkzeug 13 gezogen wird. Der Rohling wird hier bis zu einer Temperatur gleich oder oberhalb der Erweichungstemperatur des Harzes des Matrixmaterials 9, aber unterhalb der Vernetzungstemperatur des Matrixmaterials 9, erhitzt.
   Infolge der Wärmeeinwirkung zieht sich das Schrumpfband 4 passgenau auf die äußere Mantelfläche des Hohlprofil-Rohlings zusammen und dient damit während der Imprägnierung als außenkonturstabilisierendes Element.
   Zur hier nicht dargestellten Weiterverarbeitung des, wie beschrieben, kontinuierlich und endbs gefertigten Hohlprofils erfolgt zunächst die Abkühlung des Hohlprofil-Rohlings auf eine Temperatur unterhalb der Erweichungstemperatur des Matrixmaterials 9. Die Abkühlung kann rein passiv dadurch erfolgen, dass die Verweildauer des Hohlprofil-Rohlings in der sich dem beheizten Werkzeug 13 anschließenden Fertigungsstrecke 5 mindestens gleich der oder länger als die Abkühlzeit ist. Die Abkühlung kann auch aktiv beschleunigt werden, indem beispielsweise der Rohling mit gekühlter Luft bedüst wird. Nach Abkühlung des Rohlings erfolgt ein Zuschnitt auf die vorgesehene Länge sowie die Entnahme aus der Fertigungsstecke 5.

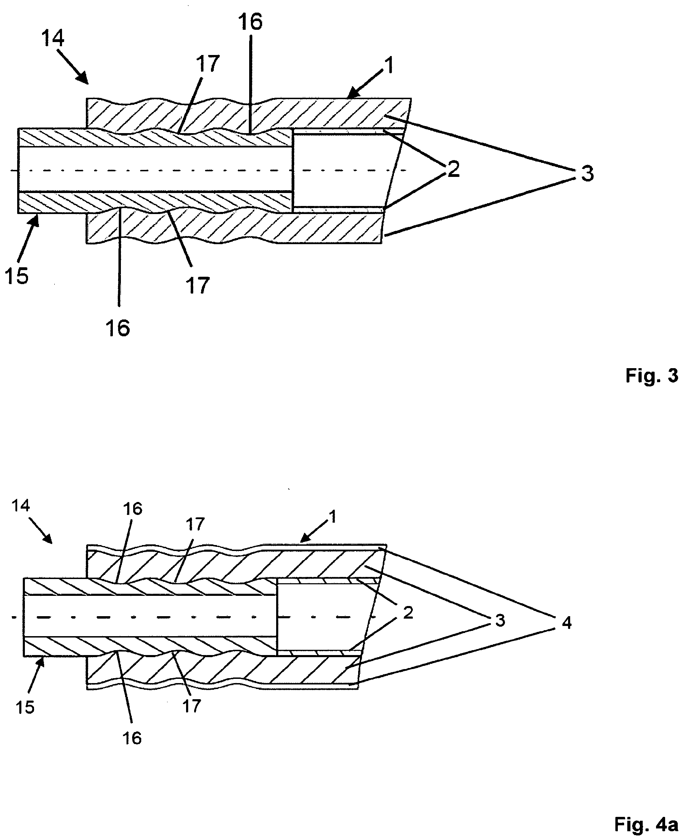

In **Fig.** 3 ist ein Längsschnitt eines erfindungsgemäßen Strukturelements 14 aus einem endlosfaserverstärktem Hohlprofil 1 und einem Lasteinleitungselement 15 dargestellt. Das Lasteinleitungselement 15 kann Hinterschnitte 16 aufweisen. Im Lasteinleitungsbereich 17 wurde der Liner 2 des Hohlprofils 1 vor der Funktionalisierung des Hohlprofils 1 zur Bildung des Strukturelements 14 entfernt, bevorzugterweise durch Ausdrehen oder Ausstechen. Im Lasteinleitungsbereich 17 besteht eine formschlüssige Verbindung zwischen dem Verstärkungsfaserlaminat 3 und dem Lasteinleitungselement 15.

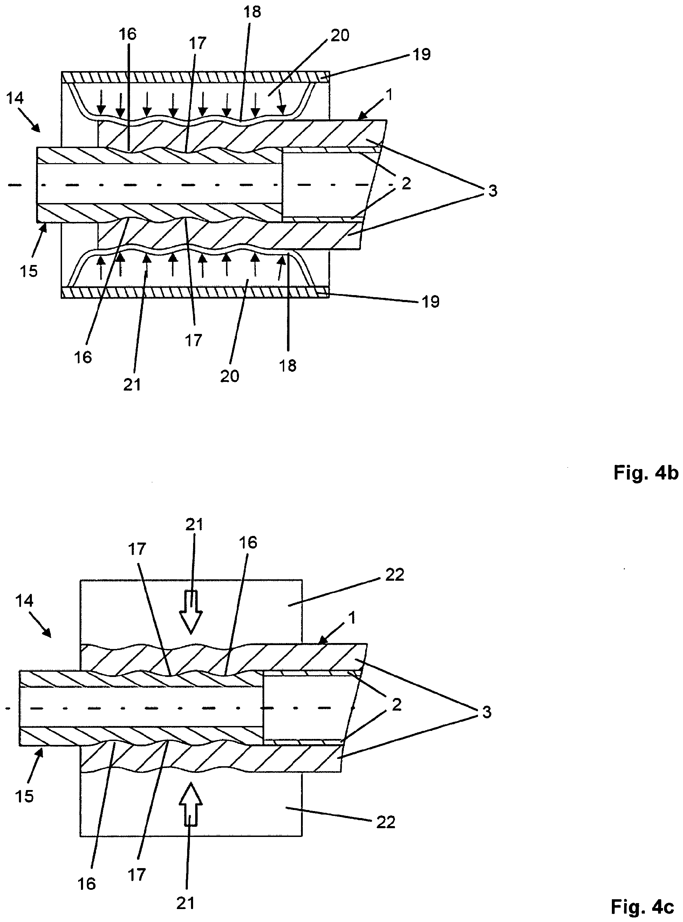

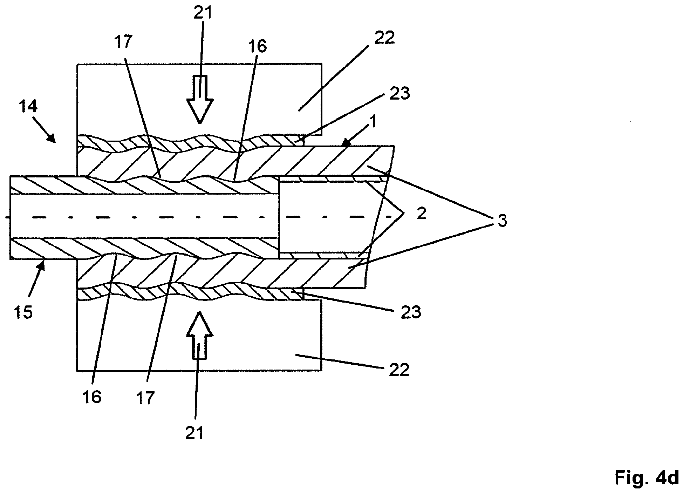

**Fig.** 4 zeigt Varianten a bis d des Verfahrensschritts der Konsolidierung und Funktionalisierung des Strukturelements 14 aus Hohlprofil 1 und Lasteinleitungselement 15 im Lasteinleitungsbereich 17. Ziel der Funktionalisierung ist das Anformen des Hohlprofils 1 an das Lasteinleitungselement 15 im Lasteinleitungsbereich 17 zurBildung einer formschlüssigen Verbindung. Dazu muss zum einen das Strukturelement 14 auf die Vernetzungs- und damit Aushärtetemperatur der Matrix des Verstärkungsfaserlaminats 3 erwärmt werden; zum anderen muss ein radial nach innen gerichteter Konsolidierungs- und Umformdruck auf das Hohlprofil 1 im Lasteinleitungsbereich 17 aufgebracht werden.
   Als inneres Formwerkzeug dient bei allen Verfahrensvarianten das Lasteinleitungselement 15. Die Wahl der Verfahrensvariante ist im Einzelfall an die Geometrie des Strukturelements 14 anzupassen und beispielsweise abhängig von der Dicke des Verstärkungsfaserlaminats 3, der Form der Hinterschnitte 16 und der Faserorientierung.
**Fig.** 4a zeigt die Aufbringung eines Konsolidierungs- und Umformdrucks im Lasteinleitungsbereich 17 mittels der thermischen Kontraktion eines Schrumpfbands 4. Ebenso kann die thermische Kontraktion des Schrumpfbands 4 zur Druckausübung für die Konsolidierung des Hohlprofils 1 als Teil des Strukturelements 14 im nicht für die Lasteinleitung vorgesehenen Bereich dienen.
**Fig.** 4b zeigt die Aufbringung eines radial nach innen gerichteten Konsolidierungs- und Umformdrucks 21 im Lasteinleitungsbereich 17 mittels einer Druckmembran 18. Bei dieser, auf dem Außenhochdruckumformen basierenden, Verfahrensvariante erfolgt die Druckübertragung von einem Umformwerkzeug 19 mittels eines Übertragungsmediums 20 auf die Druckmembran 18, so dass das Hohlprofil 1 im Lasteinleitungsbereich 17 an das als innere Formwerkzeug dienende Lasteinleitungselement 15 angeformt wird.
**Fig.** 4c zeigt die Aufbringung eines radial nach innen gerichteten Konsolidierungs- und Umformdrucks 21 im Lasteinleitungsbereich 17 durch Pressen mittels eines geteilten Formwerkzeugs 22. Die Kontur des Formwerkzeugs muss dabei der Kontur des Lasteinleitungselements 15 einschließlich seiner Hinterschnitte 16 entsprechen.
**Fig.** 4d zeigt die Aufbringung eines radial nach innen gerichteten Konsolidierungs- und Umformdrucks 21 im Lasteinleitungsbereich 17 durch Pressen mittels eines geteilten Formwerkzeugs 22 über eine umzuformende Hülse 23. Durch Verwendung der Hülse 23 wird gegenüber der in **Fig.** 4c dargestellten Verfahrensvariante das Einklemmen von Teilen des Hohlprofils 1 in den Teilungsebenen des geteilten Formwerkzeugs 22 vermieden.

### Bezugszeichen

- 1: Hohlprofil
- 2: Liner
- 3: Verstärkungsfaserlaminat
- 4: Schrumpfschlauch
- 5: Fertigungsstrecke
- 51: Maschinenrichtung
- 6: Spulenständer
- 7: Spule
- 8: Roving
- 9: Matrixmaterial
- 10: Flechtrad
- 11: Spiralisiermaschine
- 12: Schrumpfbandspiralisiermaschine
- 13: Beheiztes Werkzeug
- 14: Strukturelement
- 15: Lasteinleitungselement
- 16: Hinterschnitt des Lasteinleitungselements
- 17: Lasteinleitungsbereich
- 18: Druckmembran
- 19: Umformwerkzeug
- 20: Druckübertragungsmedium
- 21: Druckrichtung
- 22: Geteiltes Formwerkzeug
- 23: Hülse

## Patentansprüche

1. Verfahren zur Herstellung eines Strukturelements (14), umfassend ein Hohlprofil (1) aus endlosfaserverstärktem Kunststoff (3) mit einem duroplastischen Matrixmaterial (9), aufweisend eine Erweichungstemperatur unterhalb der Vernetzungstemperatur, und mindestens ein Lasteinleitungselement (15), wobei das Verfahren zumindest die folgenden Verfahrensschritte umfasst:
a. Bereitstellung eines Zuschnitts eines Hohlprofils (1) aus mittels Endlosfasern verstärktem Kunststoff (3) auf einem Liner (2), wobei der Liner (2) die innere Mantelfläche des Hohlprofils (1) bildet, und wobei das Hohlprofil (1) durch Erwärmen auf eine Temperatur gleich oder oberhalb der Erweichungstemperatur des Matrixmaterials (9) und unterhalb der Vernetzungstemperatur des Matrixmaterials (9) imprägniert ist;
b. Entfernen des Liners (2) im für die Lasteinleitung vorgesehenen Innenbereich (17) des Hohlprofils (1);
c. Anordnen eines Lasteinleitungselements (15) am für die Lasteinleitung vorgesehenen Innenbereich (17) des Hohlprofils (1);
d. Konsolidierung und Funktionalisierung des Strukturelements (14) aus Hohlprofil (1) und Lasteinleitungselement (15) durch Erwärmung des Strukturelements (14) auf eine Temperatur gleich oder oberhalb der Vernetzungstemperatur des Matrixmaterials (9) und Aufbringen eines radial nach innen wirkenden Drucks auf das Strukturelement (14), wobei das Hohlprofil (1) formschlüssig an das Lasteinleitungselement (15) angeformt wird.

2. Verfahren nach Anspruch 1, **dadurch gekennzeichnet, dass** die Bereitstellung des Hohlprofils (1) gemäß Verfahrensschritt a. zumindest folgende Verfahrensschritte umfasst:
i. Fertigung eines Hohlprofils (1) aus mittels Endlosfasern verstärktem Kunststoff (3) auf einem Liner (2), wobei der Liner (2) die innere Mantelfläche des Hohlprofils (1) bildet;
ii. Erwärmen des Hohlprofils (1) auf eine Temperatur gleich oder oberhalb der Erweichungstemperatur des Matrixmaterials (9) und unterhalb der Vernetzungstemperatur des Matrixmaterials (9);
iii. Kühlung des Hohlprofils (1) auf eine Temperatur unterhalb der Erweichungstemperatur des Matrixmaterials (9);
iv. Zuschnitt des Hohlprofils (1) und Entnahme aus der Fertigungsstrecke (5).

3. Verfahren nach Anspruch 2, **dadurch gekennzeichnet, dass** die Fertigung des Hohlprofils (1) durch Ablegen von mit dem Matrixmaterial (9) vorimprägnierten Endlosfasern oder Endlosfaserhalbzeugen auf dem Liner (2) erfolgt.

4. Verfahren nach Anspruch 2, **dadurch gekennzeichnet, dass** die Fertigung des Hohlprofils (1) in endloser Weise erfolgt, wobei das Matrixmaterial (9) den auf dem Liner (2) abgelegten Endlosfasern (8), bevorzugt mittels Pulverharzauftrag oder Harzinjektion, zugeführt wird.

5. Verfahren nach einem der Ansprüche 1 bis 4, **dadurch gekennzeichnet, dass** nach einem der Verfahrensschritte a. oder b. oder c. oder nach einem der Verfahrensschritte i. oder ii. oder iii. oder iv. eine Ummantelung des Hohlprofils (1) mit einer thermisch kontraktierbaren Umhüllung (4) erfolgt.

6. Verfahren nach Anspruch 5, **dadurch gekennzeichnet, dass** die Ummantelung des Hohlprofils (1) mit einer thermisch kontraktierbaren Umhüllung (4) nach Verfahrensschritt i. erfolgt, wobei Verfahrensschritt ii. anschließend dergestalt durchgeführt wird, dass das Hohlprofil (1) auf eine Temperatur gleich oder oberhalb der Erweichungstemperatur des Matrixmaterials (9) und unterhalb der Vernetzungstemperatur des Matrixmaterials (9) erwärmt wird, wobei eine erste thermische Kontraktion der Umhüllung (4) bis zum Anlegen an die äußere Mantelfläche des Hohlprofils (1) erfolgt.

7. Verfahren nach Anspruch 5 oder 6, **dadurch gekennzeichnet, dass** die Umhüllung (4) des Hohlprofils (1) Schrumpfband, Schrumpffolie und/oder einen Schrumpfschlauch umfasst.

8. Verfahren nach einem der Ansprüche 5 bis 7, **dadurch gekennzeichnet, dass** die Umhüllung (4) des Hohlprofils (1) mittels einer Spiralisiermaschine (12) auf die äußere Mantelfläche des Hohlprofils (1) aufgebracht wird.

9. Verfahren nach einem der Ansprüche 5 bis 8, **dadurch gekennzeichnet, dass** der radial nach innen wirkende Druck auf das Strukturelement (14) zu dessen Konsolidierung im nicht für die Lasteinleitung vorgesehenen Bereich und/oder im für die Lasteinleitung vorgesehenen Bereich (17) durch thermische Kontraktion der Umhüllung (4) aufgebracht wird.

10. Verfahren nach einem der Ansprüche 1 bis 9, **dadurch gekennzeichnet, dass** der radial nach innen wirkende Druck auf das Strukturelement (14) zu dessen Konsolidierung und Funktionalisierung im für die Lasteinleitung vorgesehenen Bereich (17) mittels einer Druckmembran (18) oder mittels eines geteilten Formwerkzeugs (22) oder mittels eines geteilten Formwerkzeugs (22) und einer umzuformenden Hülse (23) aufgebracht wird.

11. Verfahren nach einem der Ansprüche 1 bis 10, **dadurch gekennzeichnet, dass** das Matrixmaterial (9) ein duroplastisches 1K-System bestehend aus einem Epoxidharz und einem sekundären Amin als Härter ist.

12. Verfahren nach einem der Ansprüche 1 bis 11, **dadurch gekennzeichnet, dass** zur Fertigung des Hohlprofils (1) Endlosfasern (8) mittels eines Spulenständers (6) und/oder eines Flechtrads (10) und/oder einer Spiralisiermaschine (11) kontinuierlich auf dem Liner (2) abgelegt werden.

13. Verfahren nach einem der Ansprüche 1 bis 12, **dadurch gekennzeichnet, dass** der Liner (2) aus Metall oder Kunststoff besteht, wobei die Schmelztemperatur des Metalls oder die Erweichungstemperatur des Kunststoffs bevorzugt größer als die Vernetzungstemperatur des Matrixmaterials (9) ist.

14. Verfahren nach einem der Ansprüche 1 bis 13, **dadurch gekennzeichnet, dass** der Liner (2) im für die Lasteinleitung vorgesehenen Innenbereich (17) des Hohlprofils (1) durch Ausdrehen oder Ausstechen von der inneren Mantelfläche des Hohlprofils (1) entfernt wird.

15. Verfahren nach einem der Ansprüche 1 bis 14, **dadurch gekennzeichnet, dass** das Lasteinleitungselement (15) so im für die Lasteinleitung vorgesehenen Innenbereich (17) des Hohlprofils (1) angeordnet ist, dass das Lasteinleitungselement (15) und der Liner (2) des Hohlprofils (1) im Innenbereich des Hohlprofils (1) eine lückenlose, druckbeaufschlagbare Oberfläche bilden.

16. Strukturelement (14), umfassend ein Hohlprofil (1) aus endlosfaserverstärktem Kunststoff (3) mit einem duroplastischen Matrixmaterial (9) auf einem Liner (2), wobei der Liner (2) die innere Mantelfläche des Hohlprofils (1) bildet und das duroplastische Matrixmaterial (9) eine Erweichungstemperatur unterhalb der Vernetzungstemperatur aufweist, sowie mindestens ein Lasteinleitungselement (15), wobei Hohlprofil (1) und Lasteinleitungselement (15) formschlüssig miteinander verbunden sind und der Liner im für die Lasteinleitung vorgesehenen Innenbereich des Hohlprofils (1) entfernt ist.

17. Strukturelement (14) nach Anspruch 16, **dadurch gekennzeichnet, dass** das Hohlprofil (1) einen kreisringförmigen Querschnitt aufweist.

18. Strukturelement (14) nach einem der Ansprüche 16 oder 17, **dadurch gekennzeichnet, dass** das Lasteinleitungselement (15) Hinterschnitte (16) aufweist.

## Claims

1. Method for producing a structural element (14) comprising a hollow profile (1) made of continuous fibre-reinforced plastics material (3) with a thermosetting matrix material (9) having a softening temperature which is below the cross-linking temperature, and at least one load-application element (15), wherein the method comprises at least the following method steps:
a. providing a cut-to-size hollow profile (1) made of plastics material (3) reinforced with continuous fibres on a liner (2), wherein the liner (2) forms the inner lateral surface of the hollow profile (1), and wherein the hollow profile (1) is impregnated by means of heating to a temperature that is equal to or above the softening temperature of the matrix material (9) and below the cross-linking temperature of the matrix material (9);
b. removing the liner (2) in the inner region (17) of the hollow profile (1) which is intended for load application;
c. arranging a load-application element (15) on the inner region (17) of the hollow profile (1) which is intended for load application;
d. consolidating and functionalising the structural element (14) comprising the hollow profile (1) and the load-application element (15) by means of heating the structural element (14) to a temperature that is equal to or above the cross-linking temperature of the matrix material (9) and applying a radially inwardly acting pressure to the structural element (14), wherein the holbw profile (1) is moulded onto the load-application element (15) in a form-fitting manner.

2. Method according to claim 1, **characterised in that** providing the hollow profile (1) according to method step a. comprises at least the following method steps:
i. manufacturing a hollow profile (1) made of plastics material (3) reinforced with continuous fibres on a liner (2), wherein the liner (2) forms the inner lateral surface of the hollow profile (1);
ii. heating the hollow profile (1) to a temperature that is equal to or above the softening temperature of the matrix material (9) and below the cross-linking temperature of the matrix material (9);
iii. cooling the hollow profile (1) to a temperature below the softening temperature of the matrix material (9);
iv. cutting the hollow profile (1) to size and removing it from the production line (5).

3. Method according to claim 2, **characterised in that** the hollow profile (1) is manufactured by laying continuous fibres or continuous-fibre semifinished products, pre-impregnated with the matrix material (9), on the liner (2).

4. Method according to claim 2, **characterised in that** the hollow profile (1) is manufactured in a continuous manner, the matrix material (9) being fed to the continuous fibres (8) laid on the liner (2), preferably by means of powdered resin application or resin injection.

5. Method according to any of claims 1 to 4, **characterised in that** the hollow profile (1) is encased in a thermally contractible covering (4) following one of method steps a. or b. or c, or following one of method steps i. or ii. or iii. or iv.

6. Method according to claim 5, **characterised in that** the process of encasing the hollow profile (1) in a thermally contractible covering (4) is carried out following method step i., method step ii. subsequently being carried out such that the hollow profile (1) is heated to a temperature that is equal to or above the softening temperature of the matrix material (9) and below the cross-linking temperature of the matrix material (9), wherein a first thermal contraction of the covering (4) until it rests on the outer lateral surface of the hollow profile (1) takes place.

7. Method according to either claim 5 or claim 6, **characterised in that** the covering (4) of the hollow profile (1) comprises a heat-shrink ring, heat-shrink film and/or heat-shrink tubing.

8. Method according to any of claims 5 to 7, **characterised in that** the covering (4) of the hollow profile (1) is applied to the outer lateral surface of the hollow profile (1) by means of a spiralising machine (12).

9. Method according to any of claims 5 to 8, **characterised in that** the radially inwardly acting pressure on the structural element (14) for the consolidation thereof is applied in the region not intended for load application and/or in the region intended for load application (17) by means of thermal contraction of the covering (4).

10. Method according to any of claims 1 to 9, **characterised in that** the radially inwardly acting pressure on the structural element (14) for the consolidation and functionalisation thereof is applied in the region (17) intended for load application by means of a pressure diaphragm (18) or by means of a divided die (22) or by means of a divided die (22) and a sleeve (23) to be formed.

11. Method according to any of claims 1 to 10, **characterised in that** the matrix material (9) is a thermosetting 1C-system consisting of an epoxy resin and a secondary amine as the curing agent.

12. Method according to any of claims 1 to 11, **characterised in that**, in order to manufacture the hollow profile (1), continuous fibres (8) are laid on the liner (2) in a continuous manner by means of a creel (6) and/or a braiding wheel (10) and/or a spiralising machine (11).

13. Method according to any of claims 1 to 12, **characterised in that** the liner (2) consists of metal or plastics material, the melting temperature of the metal or the softening temperature of the plastics material preferably being higher than the cross-linking temperature of the matrix material (9).

14. Method according to any of claims 1 to 13, **characterised in that** the liner (2) is removed from the inner lateral surface of the hollow profile (1), in the inner region (17) of the hollow profile (1) that is intended for load application, by means of boring or gouging.

15. Method according to any of claims 1 to 14, **characterised in that** the load-application element (15) is arranged in the inner region (17) of the hollow profile (1) intended for load application in such a way that the load-application element (15) and the liner (2) of the hollow profile (1) form a continuous surface to which pressure can be applied.

16. Structural element (14) comprising a hollow profile (1) made of continuous fibre-reinforced plastics material (3) with a thermosetting matrix material (9) on a liner (2), wherein the liner (2) forms the inner lateral surface of the hollow profile (1), and wherein the thermosetting matrix material (9) has a softening temperature that is below the cross-linking temperature, and at least one load-application element (15), wherein the hollow profile (1) and the load-application element (15) are interconnected in a form-fitting manner, and wherein the liner (2) is removed in the inner region (17) of the hollow profile (1) which is intended for load application.

17. Structural element (14) according to claim 16, **characterised in that** the hollow profile (1) has an annular cross section.

18. Structural element (14) according to either claim 16 or claim 17, **characterised in that** the load-application element (15) comprises undercuts (16).

## Revendications

1. Procédé de production d'un élément structural (14), comprenant un profilé creux (1) en matériau synthétique renforcé au moyen de fibres continues (3) et comportant un matériau de matrice (9) thermodurcissable, présentant une température de ramollissement inférieure à la température de réticulation, et au moins un élément d'introduction de charge (15), le procédé comprenant au moins les étapes de procédé suivantes :
a. préparation d'une découpe d'un profilé creux (1) en matériau synthétique renforcé au moyen de fibres continues (3) sur un revêtement (2), le revêtement (2) formant la surface d'enveloppe interne du profilé creux (1), et le profilé creux (1) étant imprégné, par chauffage, à une température égale ou supérieure à la température de ramollissement du matériau de matrice (9) et inférieure à la température de réticulation du matériau de matrice (9) ;
b. retrait du revêtement (2) dans la zone intérieure (17) du profilé creux (1) prévue pour l'introduction de charge ;
c. disposition d'un élément d'introduction de charge (15) sur la zone intérieure (17) du profilé creux (1) prévue pour l'introduction de charge ;
d. consolidation et fonctionnalisation de l'élément structural (14) constitué du profilé creux (1) et de l'élément d'introduction de charge (15) en chauffant l'élément structural (14) à une température égale ou supérieure à la température de réticulation du matériau de matrice (9) et en appliquant une pression agissant radialement vers l'intérieur sur l'élément structural (14), le profilé creux (1) étant moulé sur l'élément d'introduction de charge (15) par complémentarité de forme.

2. Procédé selon la revendication 1, **caractérisé en ce que** la préparation du profilé creux (1) selon l'étape de procédé a. comprend au moins les étapes de procédé suivantes :
i. fabrication d'un profilé creux (1) en matériau synthétique renforcé au moyen de fibres continues (3) sur un revêtement (2), le revêtement (2) formant la surface d'enveloppe intérieure du profilé creux (1) ;
ii. chauffage du profilé creux (1) à une température égale ou supérieure à la température de ramollissement du matériau de matrice (9) et inférieure à la température de réticulation du matériau de matrice (9) ;
iii. refroidissement du profilé creux (1) à une température inférieure à la température de ramollissement du matériau de matrice (9) ;
iv. découpe du profilé creux (1) et retrait de la ligne de fabrication (5).

3. Procédé selon la revendication 2, **caractérisé en ce que** la fabrication du profilé creux (1) a lieu en déposant des fibres continues ou des produits semi-finis à fibres continues préimprégnés par le matériau de matrice (9) sur le revêtement (2).

4. Procédé selon la revendication 2, **caractérisé en ce que** la fabrication du profilé creux (1) a lieu de manière continue, le matériau de matrice (9) étant amené aux fibres continues (8) déposées sur le revêtement (2), de préférence au moyen d'application de résine en poudre ou d'injection de résine.

5. Procédé selon l'une des revendications 1 à 4, **caractérisé en ce qu'**après l'une des étapes de procédé a. ou b. ou c. ou après l'une des étapes de procédé i. ou ii. ou iii. ou iv., le profilé creux (1) est enrobé par une gaine thermorétractable (4).

6. Procédé selon la revendication 5, **caractérisé en ce que** le profilé creux (1) est enrobé par une gaine (4) thermorétractable selon l'étape de procédé i., l'étape de procédé ii. étant alors réalisée de telle sorte que le profilé creux (1) est chauffé à une température égale ou supérieure à la température de ramollissement du matériau de matrice (9) et inférieure à la température de réticulation du matériau de matrice (9), une première rétraction de la gaine (4) ayant lieu jusqu'à ce qu'elle repose sur la surface d'enveloppe extérieure du profilé creux (1).

7. Procédé selon la revendication 5 ou 6, **caractérisé en ce que** la gaine (4) du profilé creux (1) comprend un ruban rétrécissant, un film rétrécissant et/ou un tube rétrécissant.

8. Procédé selon l'une des revendications 5 à 7, **caractérisé en ce que** la gaine (4) du profilé creux (1) est appliquée sur la surface d'enveloppe extérieure du profilé creux (1) au moyen d'une machine à spiraliser (12).

9. Procédé selon l'une des revendications 5 à 8, **caractérisé en ce que** la pression agissant radialement vers l'intérieur sur l'élément structural (14) pour le consolider est appliquée dans la zone non prévue pour l'introduction de charge et/ou dans la zone (17) prévue pour l'introduction de charge par rétraction thermique de la gaine (4).

10. Procédé selon l'une des revendications 1 à 9, **caractérisé en ce que** la pression agissant radialement vers l'intérieur sur l'élément structural (14) pour le consolider et le fonctionnaliser est appliquée dans la zone (17) prévue pour l'introduction de charge au moyen d'une membrane de pression (18) ou au moyen d'un outil de moulage fractionné (22) ou au moyen d'un outil de moulage fractionné (22) et d'un manchon à remouler (23).

11. Procédé selon l'une des revendications 1 à 10, **caractérisé en ce que** le matériau de matrice (9) est un système thermodurcissable 1K constitué d'une résine époxy et d'une amine secondaire comme durcisseur.

12. Procédé selon l'une des revendications 1 à 11, **caractérisé en ce que** pour la fabrication du profilé creux (1), des fibres continues (8) sont déposées de façon continue sur le revêtement (2) au moyen d'un porte-bobine (6) et/ou d'une roue de tressage (10) et/ou d'une machine à spiraliser (11).

13. Procédé selon l'une des revendications 1 à 12, **caractérisé en ce que** le revêtement (2) est en métal ou en matériau synthétique, la température de fusion du métal ou la température de ramollissement du matériau synthétique étant de préférence supérieure à la température de réticulation du matériau de matrice (9).

14. Procédé selon l'une des revendications 1 à 13, **caractérisé en ce que** le revêtement (2), dans la zone intérieure (17) du profilé creux (1) prévue pour l'introduction de charge, est retiré de la surface d'enveloppe intérieure du profilé creux (1) par rotation ou par perforation.

15. Procédé selon l'une des revendications 1 à 14, **caractérisé en ce que** l'élément d'introduction de charge (15) est disposé dans la zone intérieure (17) du profilé creux (1) prévue pour l'introduction de charge de telle sorte que l'élément d'introduction de charge (15) et le revêtement (2) du profilé creux (1) forment une surface pouvant être soumise à de la pression et sans espace dans la zone intérieure du profilé creux (1).

16. Élément structural (14) comprenant un profilé creux (1) en matériau synthétique renforcé au moyen de fibres continues (3) et comportant un matériau de matrice (9) thermodurcissable sur un revêtement (2), le revêtement (2) formant la surface d'enveloppe intérieure du profilé creux (1) et le matériau de matrice (9) thermodurcissable présentant une température de ramollissement inférieure à la température de réticulation, ainsi qu'au moins un élément d'introduction de charge (15), le profilé creux (1) et l'élément d'introduction de charge (15) étant reliés l'un à l'autre par complémentarité de forme et le revêtement étant retiré dans la zone intérieure du profilé creux (1) prévue pour l'introduction de charge.

17. Élément structural (14) selon la revendication 16, **caractérisé en ce que** le profilé creux (1) présente une section transversale en forme d'anneau de cercle.

18. Élément structural (14) selon l'une des revendications 16 ou 17, **caractérisé en ce que** l'élément d'introduction de charge (15) présente des contre-dépouilles (16).
